# DEMANDE DE BREVET EUROPEEN

(11) **EP 0 975 134 A1**
(43) Date de publication de la demande: **26.01.2000**
(21) Numéro de dépôt: 99401832.3
(22) Date de dépôt: 21.07.1999
(51) Int. Cl.: H04M 3/428, H04M 3/48, H04Q 3/00

(54) **Réseau de télécommunications permettant l'activation automatique de certains services et procédé de communication mis en oeuvre dans un tel réseau**

(30) Priorité: 22.07.1998 FR 9809362
(71) Demandeur: FRANCE TELECOM, 75015 Paris (FR)
(72) Inventeur: Chatras, Bruno, 75012 Paris (FR); Algay, Chrystel, 75015 Paris (FR)
(74) Mandataire: Loisel, Bertrand

(57) **Abrégé**

Ce réseau de télécommunications comprend des commutateurs d'accès aux services (20) et supporte une architecture de réseau intelligent (RI) pour fournir un premier type de services à des utilisateurs à l'aide de points de commande de services (18). Les commutateurs d'accès aux services (20) sont en outre agencés pour fournir aux utilisateurs un second type de services conçus indépendamment de l'architecture de réseau intelligent. Ce réseau comprend des moyens d'activation automatique d'au moins un service du second type par au moins un point de commande de services (18), ces moyens ayant le même effet qu'une commande d'activation dudit service du second type qui serait entrée par un utilisateur.

## Description

La présente invention se rapporte à un réseau de télécommunications permettant l'activation automatique de certains services, et à un procédé de communication mis en oeuvre dans un tel réseau.

Dans les réseaux de télécommunications actuels, la gestion des abonnés fixes est effectuée dans des commutateurs dits CAA (Commutateur à Autonomie d'Acheminement) qui contiennent leurs profils de service et gèrent leurs accès physiques.

Actuellement, on distingue deux familles de services téléphoniques : les services supportés par les commutateurs d'abonnés ou Commutateurs d'Accès aux Services (fonction CAS) du Réseau Téléphonique Commuté (services RTC) et les services supportés par une architecture de Réseau Intelligent (services RI). La fonction CAS est définie dans la Recommandation Q.1224 de l'UIT-T.

Des Points de Commande de Services (PCS) contiennent les logiques de services et permettent d'appeler les fonctions de commande des commutateurs. Les PCS commandent les CAS au moyen de la fonction "Service Control" (SCF) et les CAS réalisent la fonction "Service Switching" (SSF) qui, associée à la fonction "Call Control" (CCF), permet l'interaction avec le PCS. Les fonctions SCF, SSF et CCF sont également définies dans la recommandation Q.1224 de l'UIT-T.

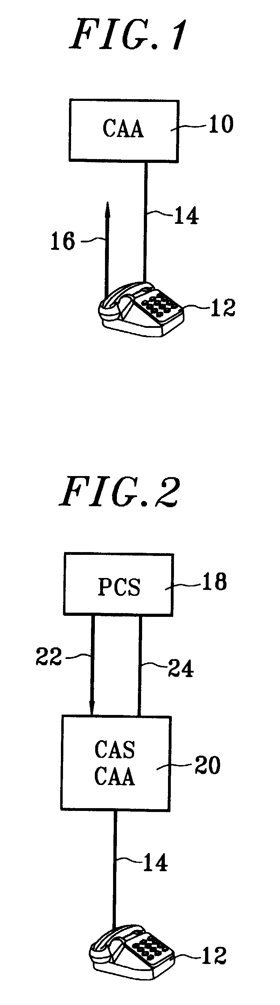

Dans la plupart des cas, notamment dans le cas des lignes analogiques, comme l'illustre la figure 1, l'activation d'un service RTC dans un commutateur d'abonné 10, relié à un poste téléphonique 12 au moyen d'une ligne d'abonné 14, est réalisée manuellement par l'utilisateur, qui compose sur le clavier de son poste téléphonique 12 une séquence de touches dédiée, constituant une commande utilisateur 16, reconnue par le commutateur 10.

Par exemple, deux services normalisés par l'ETSI, décrits dans les normes ETS 300-357 et ETS 300-738, peuvent être ainsi activés par commande utilisateur : le service de rappel d'abonné occupé ou "Completion of Call to Busy Subscriber" (CCBS), sur lignes analogiques ou RNIS, et le service de mise en attente d'appel ou "Call Waiting" (CW), sur lignes analogiques.

Un tel mode d'activation d'un service RTC présente notamment l'inconvénient de requérir en général de la part de l'utilisateur la composition au clavier d'une syntaxe dédiée à ce service. C'est le cas pour les deux exemples de services qui viennent d'être cités. Cette action est distincte du traitement d'appel d'un service RI.

Le brevet américain US-A-5 425 091 décrit une méthode de fourniture du service de rappel automatique, dans laquelle le rappel automatique est mis en oeuvre non pas par les commutateurs, mais par un processeur adjoint tel qu'un périphérique intelligent.

La présente invention a pour but de proposer une autre solution permettant de pallier l'inconvénient précité.

Dans ce but, la présente invention propose un réseau de télécommunications tel qu'énoncé dans la revendication 1, dont des modalités préférées sont énoncées dans les revendications 2 à 4.

On peut ainsi utiliser les traitements internes prévus dans les commutateurs, qui sont exécutés quand la commande est entrée par l'usager, ce qui facilite largement la mise en place de tels services.

La présente invention propose également un procédé de communication entre un point de commande de services et un commutateur d'accès aux services d'un tel réseau de télécommunications, comme énoncé dans la revendication 5.

Dans un mode de réalisation avantageux de l'invention, on effectue l'ensemble des étapes du procédé au moyen du protocole de communication INAP CS2 ("Intelligent Network Application Part - Capability Set 2"), qui est normalisé par l'UIT-T dans la Recommandation Q.1228.

Grâce à ce procédé, on peut activer automatiquement, et sans action spécifique de la part de l'utilisateur, des services tels que le CCBS, le CW, etc.

D'autres particularités et avantages de la présente invention apparaîtront dans la description ci-après d'un exemple de réalisation non limitatif, en référence aux dessins annexés, dans lesquels :
- la figure 1, déjà décrite, représente de façon schématique le mode classique d'activation d'un service RTC par l'utilisateur dans son commutateur d'abonné ;
- la figure 2 représente de façon schématique le mode d'activation automatique d'un service RTC, conformément à la présente invention ;
- la figure 3 est un diagramme illustrant des messages échangés par le CAS et le PCS lors d'une procédure d'activation automatique du service CCBS ; et
- la figure 4 est un diagramme illustrant des messages échangés par le CAS et le PCS lors d'une procédure d'activation automatique du service CW.

On considère le cas où le réseau selon l'invention supporte l'architecture d'un réseau intelligent pour les services fournis aux abonnés.

L'invention consiste à intégrer un service RTC dans un service RI, en donnant au serveur RI la possibilité de commander l'activation du service RTC dans le commutateur de l'utilisateur.

Ainsi, comme le montre la figure 2, ce n'est pas l'utilisateur, mais un PCS 18 qui envoie au CAA muni de la fonction CAS 20 une commande 22 par l'intermédiaire d'une interface CAS-PCS 24. Du point de vue du réseau, la commande 22 reçue en provenance du PCS doit avoir le même effet qu'une commande qui serait reçue de l'utilisateur. De préférence, l'interface 24 met en oeuvre le protocole INAP CS2. De même que dans le cas classique, le CAA 20 est relié au poste téléphonique 12 de l'utilisateur au moyen d'une ligne d'abonné 14.

Conformément à l'invention, on définit donc une nouvelle fonctionnalité Réseau Intelligent sur l'interface entre un commutateur d'abonné muni de la fonction CAS et un PCS. Dans le mode de réalisation préféré, on enrichit le protocole INAP CS2 en ajoutant un nouveau paramètre, appelé "ServiceInvocation", dans la commande "ContinueWithArgument" envoyée par le PCS au CAS.

Le paramètre "ServiceInvocation" prend la valeur "CCBSInvocation" lors de l'activation automatique du service CCBS, et la valeur "CWActivation" lors de l'activation automatique du service CW.

On détaille ci-après la séquence de messages échangés par un CAS et un PCS pour l'activation automatique de chacun de ces services. La syntaxe employée est celle du protocole de communication INAP CS2.

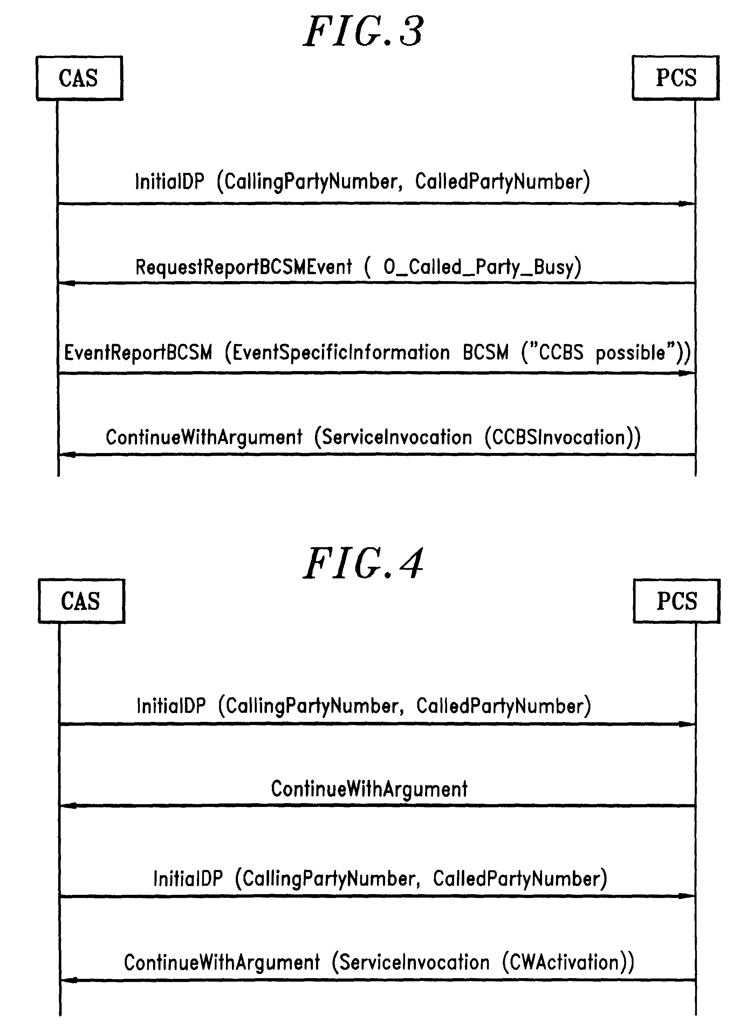

On considère tout d'abord la procédure d'activation automatique du service CCBS. Comme le montre la figure 3, pour tous les appels sortants d'un abonné appelant, le PCS est sollicité par le message "InitialDP" émis par le CAS. Le PCS reçoit le numéro composé par l'abonné dans le paramètre "CalledPartyNumber".

Le PCS retourne au CAS un message "RequestReport-BCSMEvent", qui commande l'armement du paramètre "O_Called_Party_Busy" dans le CAS.

A réception de l'événement "occupation", selon lequel la ligne de l'abonné est occupée, le CAS fait remonter cette indication au PCS en lui envoyant un message "EventReportBCSM", avec le paramètre "EventSpecific-Information BCSM" renseigné à la valeur "CCBS possible". Cette information est issue du message "libération" de la signalisation réseau et est spécifique du type de signalisation réseau.

A réception de cette information, le PCS retourne un message "ContinueWithArgument" avec le paramètre "ServiceInvocation" renseigné à la valeur "CCBSInvocation". Le service CCBS est alors mis en oeuvre par le CAA de l'abonné appelant conformément à la norme ETSI citée plus haut, sur la base du numéro mémorisé dans le CAA.

On considère maintenant la procédure d'activation automatique du service CW, illustrée par la figure 4. On la décrit dans son application à un abonné UPT (Universal Personal Telecommunications), ce service étant décrit dans la norme ETS 300 779.

On suppose que l'abonné UPT a préalablement effectué une procédure classique, non décrite ici, de localisation auprès du PCS UPT.

Tous les appels entrants vers le numéro UPT de cet abonné sont acheminés normalement par le PCS UPT jusqu'au commutateur où l'abonné UPT est localisé. A l'arrivée à ce commutateur, l'appel entrant UPT déclenche le rappel du PCS UPT. De même que précédemment, le PCS est donc sollicité par le message "InitialDP" émise par le CAS.

Lorsque le PCS reçoit un appel pour l'abonné UPT, il vérifie s'il y a un premier appel en cours pour cet abonné. Le PCS retourne au CAS l'ordre de présenter l'appel en lui envoyant le message "ContinueWithArgument".

Lorsque le PCS reçoit un deuxième appel pour l'abonné UPT, identifié par un nouveau message "InitialDP" émis par le CAS, le PCS retourne au CAS un message "ContinueWithArgument" avec le paramètre "ServiceInvocation" renseigné à la valeur "CWActivation".

A réception de cette opération, le CAS transmet au CAA la demande d'activation du service CW. Le CAA met alors en oeuvre ce service de mise en attente d'appel pour l'abonné UPT considéré.

## Revendications

1. Réseau de télécommunications comprenant des commutateurs d'accès aux services (20) et supportant une architecture de réseau intelligent (RI) pour fournir un premier type de services à des utilisateurs à l'aide de points de commande de services (18), les commutateurs d'accès aux services étant en outre agencés pour fournir aux utilisateurs un second type de services conçus indépendamment de l'architecture de réseau intelligent, caractérisé en ce qu'il comprend des moyens d'activation automatique d'au moins un service du second type par au moins un point de commande de services (18), ces moyens ayant le même effet qu'une commande d'activation dudit service du second type qui serait entrée par un utilisateur.

2. Réseau de télécommunications selon la revendication 1, caractérisé en ce que lesdits moyens d'activation automatique comprennent des moyens de génération d'un message particulier ("ContinueWithArgument") par le point de commande de services (18), et des moyens de transmission dudit message du point de commande de services (18) au commutateur d'accès aux services (20), ledit message contenant un paramètre ("ServiceInvocation") renseigné à une valeur prédéterminée indiquant que ledit service du second type doit être activé.

3. Réseau de télécommunications selon la revendication 1 ou 2, caractérisé en ce que lesdits moyens d'activation automatique permettent d'activer un service de rappel d'abonné occupé (CCBS).

4. Réseau de télécommunications selon la revendication 1 ou 2, caractérisé en ce que lesdits moyens d'activation automatique permettent d'activer un service de mise en attente d'appel (CW).

5. Procédé de communication entre un point de commande de services et un commutateur d'accès aux services d'un réseau de télécommunications selon l'une quelconque des revendications précédentes, caractérisé en ce qu'il comprend des étapes suivant lesquelles :
(a) lors de la composition d'un numéro par un abonné, on engendre un message d'initialisation du point de commande de services correspondant à cet abonné ;
(b) on fait circuler entre le point de commande de services et le commutateur d'accès aux services correspondant à cet abonné au moins un message spécifique à un service du second type à activer ;
(c) on transmet du point de commande de services au commutateur d'accès aux services un message particulier ("ContinueWithArgument") contenant un paramètre ("ServiceInvocation") renseigné à une valeur prédéterminée, ce qui provoque automatiquement dans le commutateur d'accès aux services l'activation dudit service du second type.

6. Procédé selon la revendication 5, caractérisé en ce qu'on effectue l'ensemble des étapes au moyen du protocole de communication INAP CS2.

7. Procédé selon la revendication 5 ou 6, caractérisé en ce qu'il permet d'activer automatiquement un service de rappel d'abonné occupé (CCBS).

8. Procédé selon la revendication 5 ou 6, caractérisé en ce qu'il permet d'activer automatiquement un service de mise en attente d'appel (CW).

9. Procédé selon l'une quelconque des revendications 5 à 8, caractérisé en ce que ledit point de commande de services se rapporte à un service de télécommunications personnelles universelles UPT.
